# EUROPEAN PATENT SPECIFICATION

(11) **EP 3 359 371 B1**
(45) Date of publication and mention of the grant of the patent: **03.05.2023**
(21) Application number: 16853193.7
(22) Date of filing: 27.06.2016
(51) Int. Cl.: B29C 64/118, B33Y 10/00, B33Y 30/00, B29C 64/321, B29C 64/106, B29C 64/182, B29K 23/00

(54) **ADDITIVE MANUFACTURING USING POLYMER MATERIALS**
GENERATIVE FERTIGUNG UNTER VERWENDUNG VON POLYMERMATERIALIEN
FABRICATION ADDITIVE À L'AIDE DE MATÉRIAUX POLYMÈRES

(30) Priority: 09.10.2015 US 201562239291 P
(43) Date of publication of application: 15.08.2018
(73) Proprietor: Largix Tech Ltd., 4486400 Tzur Yigal (IL)
(72) Inventor: EINAV, Omer, 4287500 Kfar Monash (IL); SHABANOV, Doron, 4486200 Zur-Yigal (IL); MATARASSO, Hasdi, 3708034 Pardes Hana (IL); ROSENMANN, Shmuel, 9728172 Jerusalem (IL); ORR, Ronen, 4063144 Tel Mond (IL); SHEELO, Amir, 4372321 Ra'anana (IL)
(74) Representative: Boult Wade Tennant LLP
(86) International application number: PCT/IL2016/050683
(87) International publication number: WO 2017/060893

(56) References cited:
- EP-A1- 2 676 784
- WO-A1-2015/009938
- US-A1- 2006 103 054
- US-A1- 2013 224 423
- US-A1- 2013 337 256
- US-A1- 2014 141 168
- US-A1- 2014 311 651
- US-A1- 2014 328 964
- US-A1- 2015 096 717
- US-A1- 2015 096 717

## Description

### CROSS REFERENCE TO RELATED APPLICATIONS

This application claims the benefit of U.S. Provisional Patent Application No. 62/239,291 filed on October 9, 2015, which is incorporated herein by reference in its entirety.

### BACKGROUND OF THE INVENTION

### 1. TECHNICAL FIELD

The present invention relates to the field of additive manufacturing, and more particularly, to additive manufacturing using polymer materials.

### 2. DISCUSSION OF RELATED ART

Historically, prototype development and customized manufacturing has been performed by traditional methods using metal extrusion, computer-controlled machining and manual modeling techniques, in which blocks of material are carved or milled into specific objects. These subtractive manufacturing methodologies have numerous limitations. They often require specialist technicians and can be time- and labor intensive. The time intensity of traditional modeling can leave little room for design errors or subsequent redesign without meaningfully affecting a product's time-to-market and development cost. As a result, prototypes have been created only at selected milestones late in the design process, which prevents designers from truly visualizing and verifying the design of an object in the preliminary design stage. The inability to iterate a design rapidly hinders collaboration among design team members and other stakeholders and reduces the ability to optimize a design, as time-to-market and optimization become necessary trade-offs in the design process.

Additive manufacturing ("AM") addresses the inherent limitations of traditional modeling technologies through its combination of functionality, quality, and ease of use, speed and cost. AM is significantly more efficient and cost effective than traditional model- making techniques for use across the design process, from concept modeling and design review and validation, to fit and function prototyping, pattern making and tooling, to direct manufacturing of repeatable, cost- effective parts, short-run parts and customized end products.

Introducing 3D modeling earlier in the design process to evaluate fit, form and function can result in faster time-to-market and lower product development costs. For customized manufacturing, 3D printers eliminate the need for complex manufacturing set-ups and reduce the cost and lead-time associated with conventional tooling. The first commercial 3D printers were introduced in the early 1990s, and since the early 2000s, 3D printing technology has evolved significantly in terms of price, variety and quality of materials, accuracy, ability to create complex objects, ease of use and suitability for office environments. 3D printing is already replacing traditional prototype development methodologies across various industries such as architecture, automotive, aerospace and defense, electronics, medical, footwear, toys, educational institutions, government and entertainment, underscoring its potential suitability for an even broader range of industries.

3D printing has created new applications for model-making in certain new market categories, such as: education, where institutions are increasingly incorporating 3D printing into their engineering and design course programs; dental and orthodontic applications, where 3D printed models are being used as replacements for traditional stone models, implants and surgical guides and for crowns and bridges for casting; Furthermore, 3D printing is being used in many industries for the direct digital manufacturing of end-use parts.

Carneiro et al. 2015, Fused deposition modeling with polypropylene, Materials & Design 83: 768-776 discuss the suitability of polypropylene (PP) for used in fused deposition modeling (FDM)-based 3D printing.
An example of an extrusion-based additive manufacturing system is given in EP Patent Application publication No. 2676784. The publication discloses an object formed by extrusion-based additive manufacturing system, a filament for use as consumable feedstock in such a system, and a method of manufacturing of such a filament. The filament has a core-shell structure. The filament core has a higher melting point than the shell but not a higher crystallinity, and in another embodiment a filament core with a higher crystallinity than an amorphous inner shell but not a higher melting point. By combining high crystallinity with high melting point in the reinforcement portion, the filament can be extruded from the extrusion head without melting the reinforcement portion and destroying its relatively high crystallinity. As a result the reinforcement portion of the filament can retain attractive properties such as high yield strength and/or piezoelectric properties in the final product.
Another example of an apparatus for fiber reinforced additive manufacturing is given in International Patent Application publication WO 2015/009938. The publication discloses three dimensional printers, and reinforced filaments, and their methods of use are described. In one embodiment, a void free reinforced filament is fed into an conduit nozzle. The reinforced filament includes a core, which may be continuous or semi-continuous, and a matrix material surrounding the core. The reinforced filament is heated to a temperature greater than a melting temperature of the matrix material and less than a melting temperature of the core prior to applying the filament from the conduit nozzle.

### SUMMARY OF THE INVENTION

The following is a simplified summary providing an initial understanding of the invention. The summary does not necessarily identify key elements nor limit the scope of the invention, but 20 merely serves as an introduction to the following description.

One aspect of the present invention provides a method of additive manufacturing according to claim 1. Another aspect of the invention provides an additive manufacturing system (100) according to claim 7.

These, additional, and/or other aspects and/or advantages of the present invention are set forth in the detailed description which follows; possibly inferable from the detailed description; and/or learnable by practice of the present invention.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:
**Figure 1A** is a high level schematic block diagram of an additive manufacturing system, according to some embodiments of the invention.
**Figure 1B** is a high level schematic illustration of a flow in the additive manufacturing system and their modification possibilities, according to some embodiments of the invention.
**Figure 2** is a high level schematic illustration of the system, additively manufacturing a cylindrical part, according to some embodiments of the invention.
**Figures 3A** and **3B** are high level schematic illustrations of tips and positioning unit of system, according to some embodiments of the invention.
**Figures 4A** and **4B** are high level schematic illustrations of tips of the system, according to some embodiments of the invention.
**Figure 5** is a high level schematic illustration of an exemplary strand production module and tip, according to some embodiments of the invention.
**Figures 6A- 6F** are high level schematic illustrations of the system using strands as added material, according to some embodiments of the invention.
**Figures 7A-7F** are high level schematic configurations of attached strands at various spatial configurations, according to some embodiments of the invention.
**Figures SA-11** are high level schematic illustrations of various types of strands and their attachment, according to some embodiments of the invention.
**Figure 12** is a high level flowchart illustrating a method of additive manufacturing, according to some embodiments of the invention.

### DETAILED DESCRIPTION OF THE INVENTION

Prior to the detailed description being set forth, it may be helpful to set forth definitions of certain terms that will be used hereinafter.

The term "monolithic attachment" as used in this application refers to the connection of polymer parts at a level defined by given product requirement. The level of monolithic attachment may be selected according to the application. In certain embodiments, the level of monolithic attachment may be such that any two layers, strands and/or particles are separable only upon applying a certain percentage (e.g., 70%, 80%, 90% or 100%, depending on the case) of the force required to tear an equivalent uniform part. In certain embodiments, the monolithic attachment may comprise connecting the layers, strands and/or particles to each other in a uniform way that does not leave traces of the connection interface that are mechanically weaker than the surrounding material (roughly equivalent to 100% force mentioned above).

In the following description, various aspects of the present invention are described. For purposes of explanation, specific configurations and details are set forth in order to provide a thorough understanding of the present invention. However, it will also be apparent to one skilled in the art that the present invention may be practiced without the specific details presented herein.
Furthermore, well known features may have been omitted or simplified in order not to obscure the present invention. With specific reference to the drawings, it is stressed that the particulars shown are by way of example and for purposes of illustrative discussion of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein is for the purpose of description and should not be regarded as limiting.

Unless specifically stated otherwise, as apparent from the following discussions, it is appreciated that throughout the specification discussions utilizing terms such as "processing", "computing", "calculating", "determining", "enhancing" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. Any of the disclosed modules or units may be at least partially implemented by a computer processor.

The present invention relates to additive manufacturing by robotic 3D real production systems for direct manufacturing of real objects that are subsequently used as products. The manufacturing processes are streamlined to enable production of objects that meet required industrial standards to replace intensive labor and significant investments of production tooling. The present invention enables real production of objects that are generally hard to manufacture or expensive using conventional subtractive manufacturing methodologies. Clearly, the present invention also enables industrial production of small parts as well as production of prototypes and production of simple and cheap parts.

Systems and methods of additive manufacturing are provided, in which solid polymer material in form of strand(s) or particles is continuously received, and its surface is heated peripherally to liquefy the surface, using specified heating-related parameters which are selected to maintain a central volume of the continuously received solid polymer material in a solid state. The surface of a polymer substrate is also liquefied, and the peripherally heated surface of the continuously received solid polymer material is attached to the liquefied surface of the polymer substrate, followed by re-solidification of the liquefied surface to yield monolithic attachment of the material to the substrate. Liquefying only the surface of the material maintains some of its strength, as well as its flexibility and material properties, and prevents deformation and other changes upon solidification. The monolithic attachment provides uniform and controllable industrial products, which cannot currently be produced by polymer additive manufacturing.

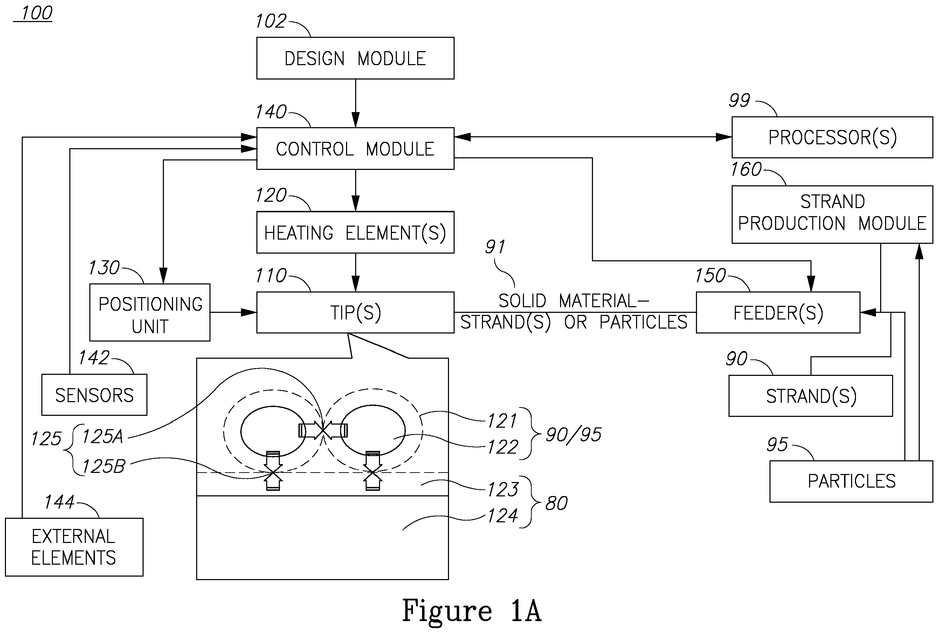

**Figure 1A** is a high level schematic block diagram of an additive manufacturing system **100,** according to some embodiments of the invention. Units in system **100** are illustrated schematically and may be implemented in various ways, some of which illustrated in the following figures. Units may be associated with processor(s) **99** for carrying out data processing related functions.

Additive manufacturing system **100** comprises one or more feeder(s) configured to feed, continuously, solid polymer material **91** in form of at least one strand **90** and/or a plurality of particles **95** and one or more tip(s) **110** configured to receive, continuously, solid polymer material **91** from feeder(s) **150.** In the following, system **100** is sometimes described as having one tip **110** and one feeder **150** for simplicity, without limiting the scope of the disclosure thereto. Tip **110** may be understood as handling a single fed material strand or as handling multiple material strands, as described below.

System **100** further comprises at least one heating element **120** configured to heat tip **110** to a specified temperature. At least one heating element **120** is further configured to liquefy by heating at least part of a surface **123** of a polymer substrate **80** (leaving a bulk **124** of substrate **80** solid) and/or to liquefy by heating at least part of a surface **121** of fed material **91** as the polymer substrate, leaving a core **122** of material **91** solid. The actual depth of the part(s) of surfaces **121, 123** which are liquefied may vary depending on various parameters such as form and type of fed material **91** and substrate **80** (respectively), heating-related parameters as presented below etc. The depth of the liquefied surfaces may be selected to maintain large enough material core **122** and substrate bulk **124** solid to provide required mechanical and shape properties of the produced part, while optimizing the solidification process and resulting part properties. For example, deeper liquefied surfaces require more intense heating yet provide more solidification time than shallower liquefied surfaces. The surface depths may be monitored and adjusted as part of the realtime process control described below.

In certain embodiments, up to 50% of the cross sectional area of material **91** may be liquefied, leaving at least 50% of the cross sectional area of material **91** solid. Liquefied surface parts **121** may be circumferential or may extend only to one or more sides of the cross sectional area of material **91.** For example, only one, two or three sides of a square cross section may be liquefied.

Tip **110** and substrate surface **123** may be heated by the same or by different heating elements **120.** Tip **110** is further configured to heat a surface **121** of continuously received solid polymer material **91** peripherally to liquefy surface **121,** using specified heating-related parameters which are selected to maintain a central volume **122** of continuously received solid polymer material **91** in a solid state.

Advantageously with respect to prior art such as Carneiro *et al.* 2015, (in which PP strands are molten prior to deposition), heating only the periphery of the polymer substrate and of the polymer material, possibly to a shallow depth and for a short time, prevents shrinkage upon re- solidification **125** (denoted in **Figure 1A** by thick arrows) and ensures good shape control of the resulting manufactured parts.

Moreover, disclosed systems **100** and methods **300** provide additive manufacturing which is applicable to industrial processes and enable additive manufacturing of actual industrial parts, rather than merely of models as in the prior art. In particular, quality control is integrated in the manufacturing process, which provides uniform and closely monitored parts. Disclosed systems **100** and methods **300** are configured as robust additive manufacturing system and methods which enable handling received materials in the order of magnitude of several kilograms or several tens of kilograms per hour. Clearly, multiple systems **100** may handle larger amounts, and smaller system configurations may handle smaller amounts and finer details (e.g., ranging down to grams).

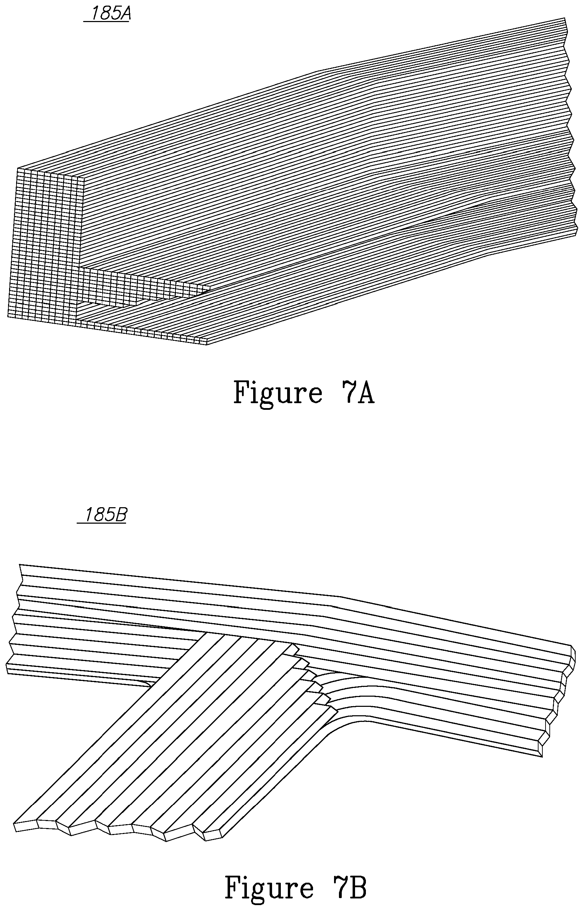

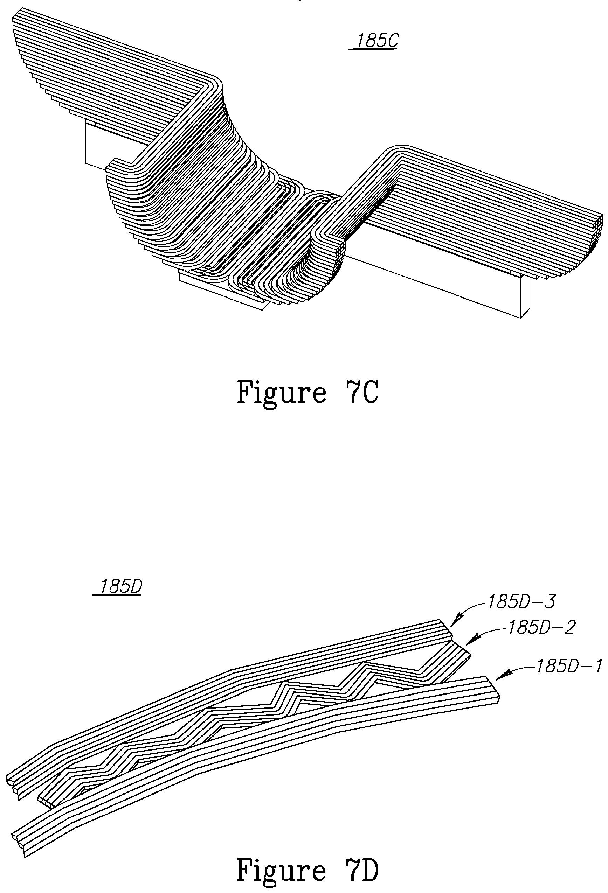

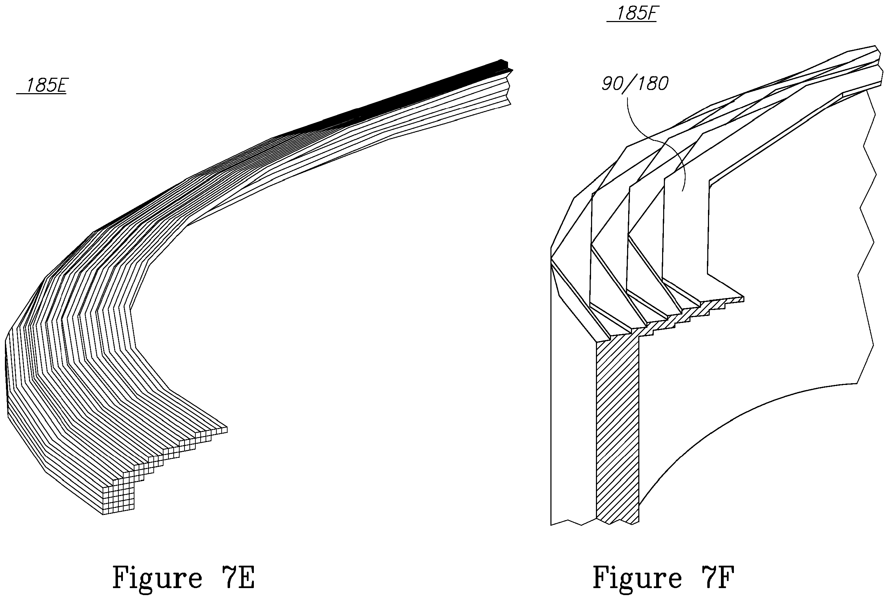

Liquefying only the periphery of received material **91** maintains the material strength during manufacturing, enabling production of overhanging structures (see e.g., **Figures 7A****,** **7C****,** **7E, 7F** below) without the need for additional supports and enables guiding or flexing received material **91** during production to achieve required shapes and surface/bulk features. The strength of the material core which is maintained solid enables production of overhanging structures without the need for additional supports, which is unheard of in the current state of the art. The monolithic attachment of received material **91** to substrate **80** maintains uniform mechanical characteristics throughout the manufactured parts.

The specified heating-related parameters may comprise, as examples, a selection of the heat source (e.g., a contact heater, a hot air or other convective heater, a radiative heater such as a halogen or infrared heater, and inductive heater, a laser heater etc.), a heating temperature, a heating duration as well as feeding parameters such as a feeding velocity (or a feeding force) of solid material **91,** which determine the heating duration of fed material **91.**

Additive manufacturing system **100** is further configured to attach peripherally heated surface **121** of continuously received solid polymer material **91** to liquefied surface **123/121** of polymer substrate **80/91** (respectively), wherein the attachment to the substrate is achieved by a re- solidification **125A/125B** (respectively) of the liquefied surface to yield monolithic attachment. As illustrated in **Figure 1A****,** any of the following options may be manufactured by system **100:** two or more strands **90** may be attached to each other (one or more strand(s) being the respective substrate), particles **95** may be attached to each other (one or more particle(s) being the respective substrate) and/or at least one strand or particles as material **91** may be attached to substrate **80,** which may comprise a structure that was previously produced by additive manufacturing system **100,** e.g., one operating layer by layer. Material **91** may be fed as bulk material, pellets, bids, rods, wires etc., may possibly comprise more than one material to provide composites, and may be possibly preprocessed. In any of these cases, the same operation principle is used, namely liquefying only the surfaces of the attached elements to provide monolithic attachment without form change upon re- solidification. This operation principle enables production of parts having controlled and uniform characteristics.

Tip **110** may be further configured to receive, continuously, a plurality of solid material strands **90,** which are attached to each other by re-solidification **125A** of their liquefied surfaces **121,** according to a spatial feeding configuration (e.g., a linear arrangement of strands **90** next to each other, or other configurations, see **Figures 7A-7F** for various non-limiting examples). Attachment may be assisted by tip **110** being further configured to press strands **90** against each other to enhance then- attachment and/or by feeder **150** being further configured to feed strands **90** at specified angles with respect to each other that enhance then- attachment.

Tip(s) **110** may have a wide range of designs, corresponding to fed material **91,** heating requnements and product design. For example, tip(s) **110** may comprise one or more openings, possibly with different shapes and sizes, and each process or process step may be used one, some or all of the openings. On or more opening in tip **110** may have an adjustable cross section. Tip(s) **110** may comprise additional elements such as co-dispensers of molten or semi-molten material and/or vibration units (internal or external, possibly using ultrasound). Tip(s) **110** may comprise guiding elements to guide material movement through tip(s) **110,** wipers blending and smoothing material 91 and/or attached material **91** as well as possibly pre-heating and post-cooling elements (e.g., laser heating element).

Feeder(s) **150** may be further configured to control feeding parameters of each strand **90** fed to tip **110.** Feeding parameters may be used to control the form of the produced part, e.g., gradually increasing feeding speed in one dn-ection of linearly fed strands may be configured to yield a bend of the produced part to the opposite dn-ection - bending toward the slowly fed strands. For example, e.g., strands which are fed at higher speed curve inwards, toward strands which are fed at lower speed.

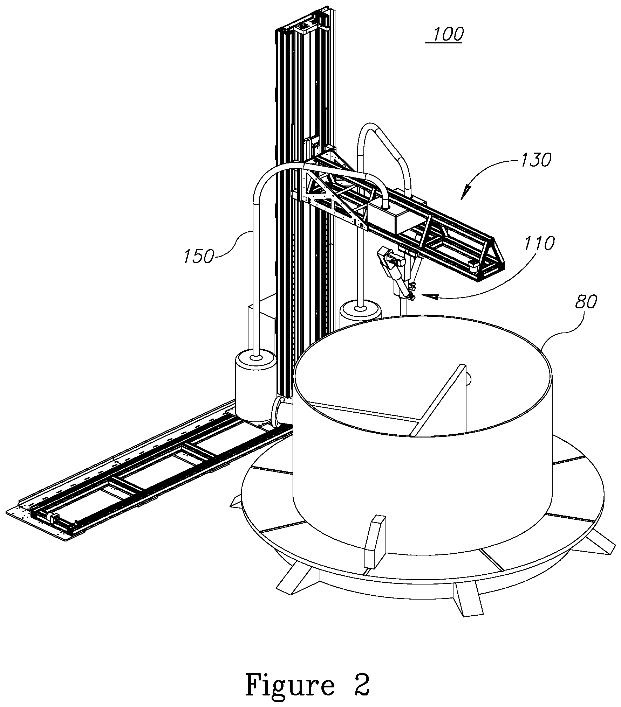

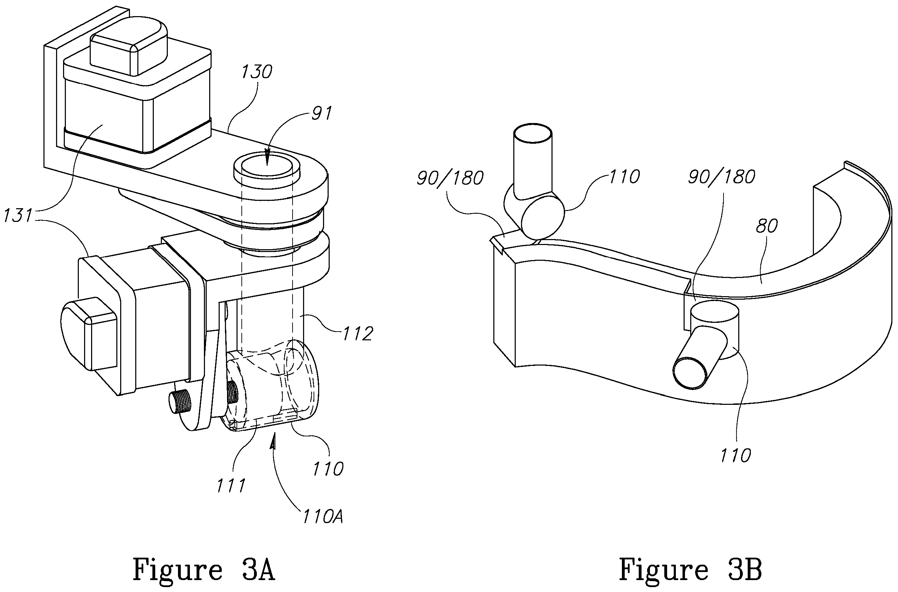

Strands **90** may have any form of cross section (e.g., rectangular, round, triangular, hexagonal etc., see **Figures 3B****,** **4B****,** **5****,** **7A****,** **8A, 9A****, lOA,** and **11** for non-limiting examples) and may be full or hollow (in case of hollow strands an inner periphery of the hollow in the strand is left solid during attachment). Strand cross section may be modified by the attaching process by the surface liquefaction and possible due to applied pressure. Attached strands **90** may differ, e.g., oneor more of strands **90** may be made of different solid materials, one or more strands **90** may be enforced (e.g., by carbon fibers) and/or one or more of strands **90** may have additive(s) (e.g., fillers, colorants etc.). Using strands **90** of various types enables manufacturing complex parts, having specifically designed features. For example, system **100** may be used to manufacture parts such as containers having walls made of the strands (see **Figure 2** for a non-limiting example). The walls may have an external colored surface manufactured using external colored strands, intermediate light weight bulk manufactured using middle hollow, possible enforced strands and inner passivated surface manufactured using inner strands with corresponding additives that suppress chemical reactivity.

System **100** may further comprise a strand production module **160** configured to produce strands **90,** continuously and simultaneously (on-line) with the feeding of strands **90** to tip **110.** Strands **90** may be produced from melting particles (e.g., by extrusion) just prior to their use in tip **110,** after undergoing shape regulation in strand production module **160.** For example, strand production module **160** may be configured to adjust a cross section of the produced strands according to specified attachment and structural requirements. Alternatively or complementarily, strands **90** may be fed by feeder **150** to tip **110** from rolls of strand produced off-line with respect to the operation of system **100.**

System **100** further comprises a positioning unit **130** configured to position tip(s) **110** with respect to substrate **80** according to a specified product design. Positioning unit **130** may follow detailed additive manufacturing process parameters to produce products or parts after specifications (which may be adapted to the unique manufacturing characteristics of system **100).** Positioning unit **130** may comprise one or more robotic units configured to position and maneuver tip(s) **110** according to the designed manufacturing process. Positioning unit **130** may comprise any of gantry(ies), bridge(s), robot(s), linear and rotary axes, rails, pulley(ies) etc. Positioning unit **130** may be configured to operate multiple tip(s) **110,** possibly manufacturing multiple parts, simultaneously.

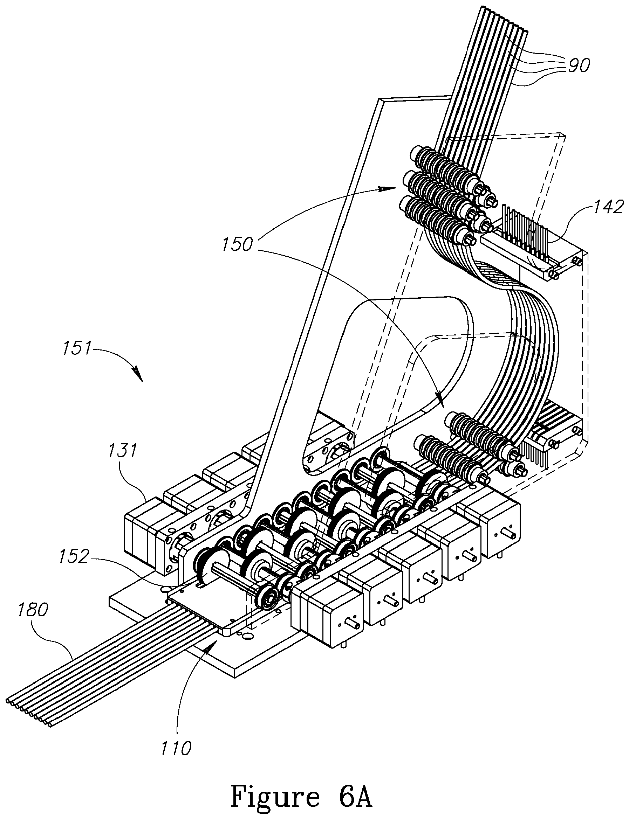

Positioning unit **130** may be further configured to position tip **110** to press peripherally heated surface **121** of continuously received solid material **91** against substrate **80.** Tip **110** may be configured to continuously receive and attach to each other multiple solid material strands **90,** and position unit **130** may be configured to positon tip **110** to simultaneously attach strands **90** to substrate **80** (see **Figures 6A-6F** for non-limiting examples).

System **100** further comprises a control module **140** configured to control any of feeder(s) **150,** heating element(s) **120** and positioning unit **130** and to monitor the attachment in closed loop to control a quality of the manufactured product. For example, the closed loop control may be implemented by control module **140** being configured to modify the feeding parameters and/or the specified heating parameters to determine a depth of surface liquefaction **121** with respect to a geometry of substrate **80,** while maintaining central volume **122** in a solid state. Control module **140** may be configured to modify the specified heating and/or feeding parameters on-the-fly according to the monitored attachment and controlled quality. It is emphasized that control module **140** provides continuous control of the manufacturing process (not merely a layer-by-layer control as in other additive manufacturing processes) and continuously ensures the quality of the produced part.

Control module **140** may comprise multiple sensors **142** of various types (e.g., laser scanners, cameras, IR sensors, inductive and capacitance sensors, acoustic sensors, temperature sensors) configured to monitor the production process, e.g., measure positions of system elements, measure temperatures such as actual material and nozzle temperature profile and compare to planned and or past data, surface temperatures, measure material properties (e.g., volume, material mixtures and properties of material components) and their variation. Control module **140** is further configured to correct any of the measured features by modifying heating and feeding parameters, positioning unit movements etc. For example, correction criteria may be set, such as volumetric and dimensional constraints and tolerances for part parameters such as size, surface features, flatness and perpendicularity, critical features (e.g., a hole, a flange, connectors etc.), material strength, standards, textures etc. Process corrections by control module **140** may be carried out on the fly (real time) and/or at spatio-temporal intervals or after production. Corrections may be implemented by using the measured variation to (i) adjust the planned dimension to actual manufactured features (adaptive manufacturing, e.g., changing manufacturing parameters according to certain shifts in the substrate), (ii) create gradual corrections to gradually restore the dimensions to the original design, (iii) suggest or prompt design modification, (iv) add supports that correspond to monitored variation and/or (v) change material flow characteristic (e.g., size of orifice in tip **110,** temperature, geometry of molten mass, process speed, etc.). Additionally or alternatively, control module **140** may be configured to use other devices or external elements **144** for carrying out the corrections such as second end-effectors or elements - for example, heat/cooling sources, wipers, hammer-like units, spindles and/or final machining or other external robots or machines.

Solid polymer material **91** and/or polymer substrate **80** may comprise polypropylene (PP) or polyethylene (PE) which have large thermal expansion coefficients (in the order of magnitude of 10-⁴ m/(m K) and higher). System **100** and method **300** disclosed below enable additive manufacturing at industrial scale using PP or PE which is not possible with prior art technology, as the latter liquefies all the material, which then undergoes shape and dimensional changes upon re- solidification that contort the manufactured product and result in uneven mechanical properties of the product. In contrast, the disclosed systems and methods maintain the form and the mechanical properties of solid central volume **122** of the polymer material and provide uniform re-solidification and uniform mechanical attachment of material **91** to substrate **80** resulting in shape and mechanical properties of the manufactured products which can be designed to yield industrially viable parts. Moreover, the closed loop process controls provides on-line verification of the quality of manufacturing, ensuring uniform part batches according to design and having uniform mechanical properties. Clearly, polymer materials with smaller thermal expansion coefficients (e.g., in the order of magnitude of 10-⁵ m/(m K) and lower, e.g., ABS-acrylonitrile butadiene styrene, PC- polycarbonate etc.) may also be used.

System **100** may further comprise a design module **102** configured to produce a proper process design of given parts using system **100.** For example, material **91** may be optimized for certain requirements, added layers may be design according to product requirements, positioning unit movements may be minimized, material cuttings reduced and special features may be adapted for the additive manufacturing (e.g., sharp corners). Design module **102** may receive modifications from control module **140** during and after manufacturing to improve the process design and the manufacturing process.

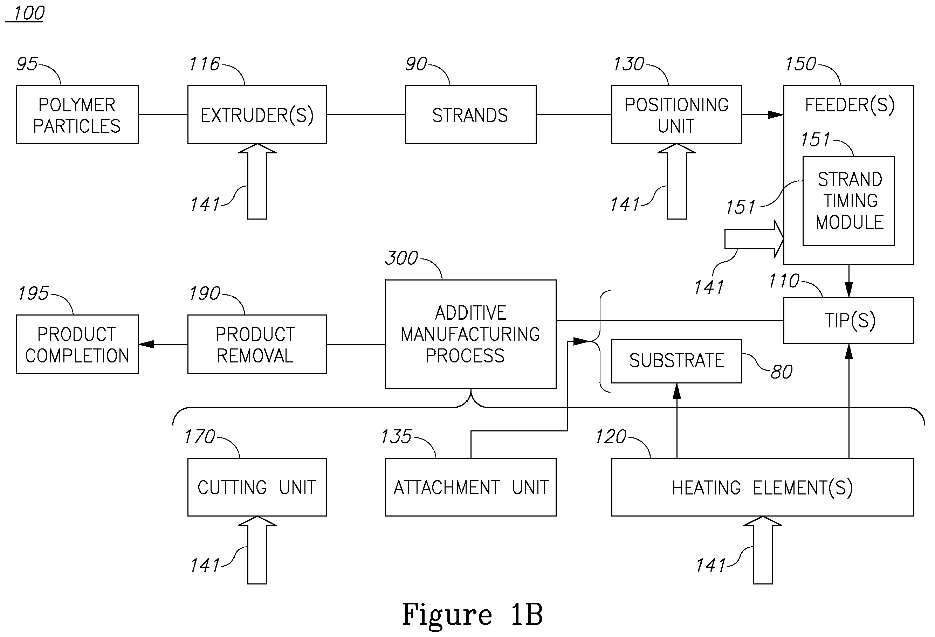

**Figure 1B** is a high level schematic illustration of a flow in additive manufacturing system **100** and their modification possibilities, according to some embodiments of the invention. **Figure lB** illustrates schematically the flow, starting from raw material such as polymer particles **95** which may comprise PP or any other thermoplastic polymer possibly with various additives (e.g., UV protective materials, fillers) and various enforcement components (e.g., carbon fibers, glass fibers etc.), which is drawn to strands **90** by an extruder **161** as a non-limiting example, either on-line or off-line with respect to the operation of system **100.** Strands **90** may have any cross section (round, square, triangular), any dimension or form, and may be co-extruded from more than one extruder and comprise multiple materials. Extruder(s) **161** may be controlled **141** by control unit **140** to provide strands that correspond to product requirements and to provide online closed loop manufacturing control and quality assurance (QA).

Positioning unit **130** may comprise any system such as robotic units, arms, gantries, bridges or even remotely controlled rotorcraft(s), and may also be controlled **141** by control unit **140** to control the positions and movements of components of system **100** (at all directions) and particularly of tip(s) **110** according to product requirements and to provide online closed loop QA.

Feeder(s) **150** may comprise a strand timing module **151** which feeds strands **90** to tip **110,** possibly at different speeds relating to the geometric configurations of part production, heating parameters, strand materials and possibly synchronized with extruder(s) **161.** Feeder(s) **150** and/or strand timing module **151** may be controlled **141** by control unit **140** to control the feeding parameters of each strand (together or separately) according to product requirements and to provide online closed loop QA. Strand timing module **151** enables exact control on strand feeding speed and provides full control on the geometry of the manufactured product, e.g., by providing feeding speeds that correspond to specific product radii and surface features, by providing corresponding strands to specific product parts and modifying the composition of strands during manufacturing and so forth.

Tip(s) **110** may comprise any multi-channel unit for handling multiple strands and for heating and attaching the strands to provide manufactured stripes (see **Figures 3B****, 6A-6F, 7A, 7D-** **11)** to be added to substrate **80.** Tip(s) **110** may have various cross sections, constant or variable,and may enable control of the feeding angles of the strands. Heating element(s) **120** may utilize various heating technologies as listed above (contact, convection, radiation, induction, laser etc.) to heat tip(s) **110** and substrate **80,** in either same or different means and according to corresponding requirements. The heating levels as part of the heating parameters may be adjusted according to product specifications, geometry and strand materials, and may be controlled **141** by control unit **140** to according to product requirements and to provide online closed loop quality assurance (QA).

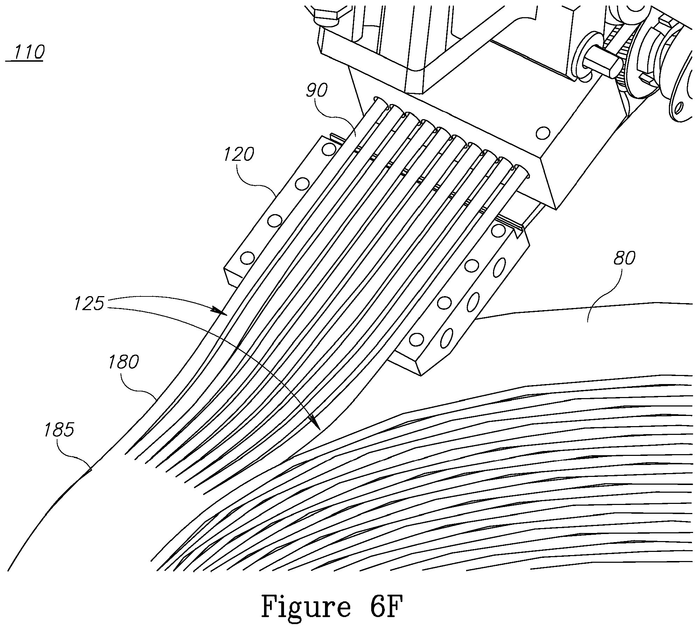

System **100** may comprise an attachment unit **135** configured to attach material **91** with liquefied surface to substrate **80**, e.g., attach a stripe **180** (see e.g., **Figures 3B** and **6F****)** to substrate **80** controllably, e.g., using a roller. System **100** may further comprise a cutting unit **170** configured to cut edges of stripes **180** to provide finish requirements of the produced parts (e.g., using a laser cutter). Once additive manufacturing **300** is finished, the manufactured product is removed from the manufacturing region **190** (or system **100** moves to a different production region) and the product is completed **195** (e.g., is added components, finished, assembled, etc.) and tested.

**Figure 2** is a high level schematic illustration of system **100** additively manufacturing a cylindrical part, according to some embodiments of the invention. **Figure 2** schematically illustrates substrate **80** as an additively-manufactured cylindrical part such as container, possibly positioned ona turntable (associated with positioning unit **130** and controlled by control unit **140)** and being produced by additive manufacturing via tip **110** receiving material from feeder **150** and positioned by positioning unit **300.** Control unit **140** is not shown, yet may comprise remote user interface (e.g., via a cloud service, communication link, etc.), a design module and corresponding monitoring and control software. The cylindrical part may be manufactured simultaneously by multiple tip(s) **110.**

**Figures 3A** and **3B** are high level schematic illustrations of tips **110** and positioning unit **130** of system **100,** according to some embodiments of the invention. In the illustrated non-limiting design, positioning unit **130** may comprise motor(s) **131** configured to position tip **110** correctly, a cavity **112** through which material **91** is fed and a plunger as an aperture control member **111** configured to modify the size and possibly form of an aperture **110A** in tip **110.** Plunger **111** is possibly controlled by one of motor(s) **131.** Heating the surface of material **91** may be carried out via aperture control member **111** (such as the plunger) and/or via cavity **112.** One or more tip **110** may be used to deposit material on substrate **80** in any direction, e.g., on horizontal or vertical surfaces of substrate **80.** The deposited material may comprise attached broad strands **90** and/or stripes **180** composed from thin strands **90** attached to each other in tip **110.**

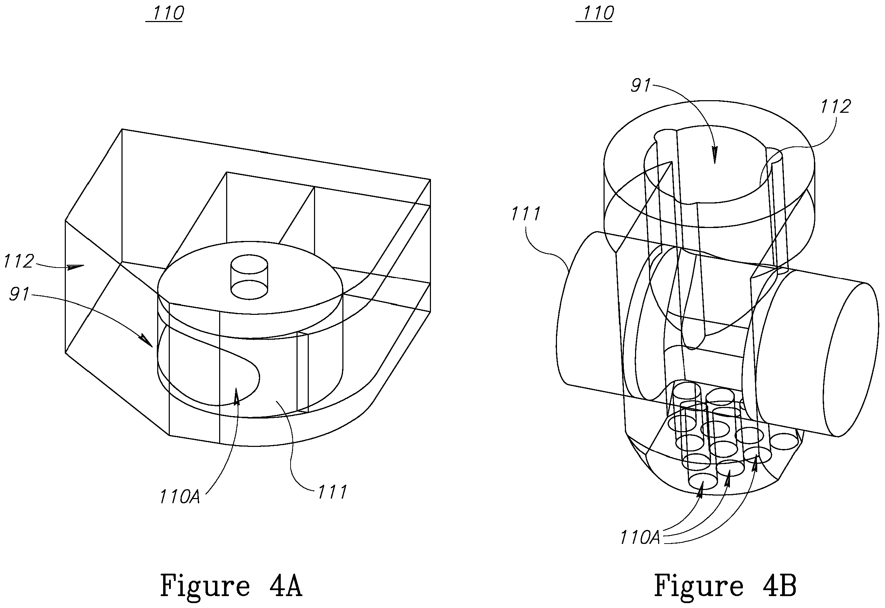

**Figures 4A** and **4B** are high level schematic illustrations of tips **110** of system **100,** according to some embodiments of the invention. In **Figure 4A****,** aperture control member **111** is illustrated as a rotary unit with a channel of variable opening. Upon rotation of rotary unit **111,** the size and form of aperture **110A** in tip **110** changes to modify the extruded material. In **Figure 4B****,** aperture control member **111** is illustrated as a rotatable rod having a varying profile that controls a number of available apertures **110A** in tip **110,** which may receive strands **90.** Heating the surface of material **91** may be carried out via aperture control member **111** (such as the rotary unit or rotatable rod) and/or via cavity **112.**

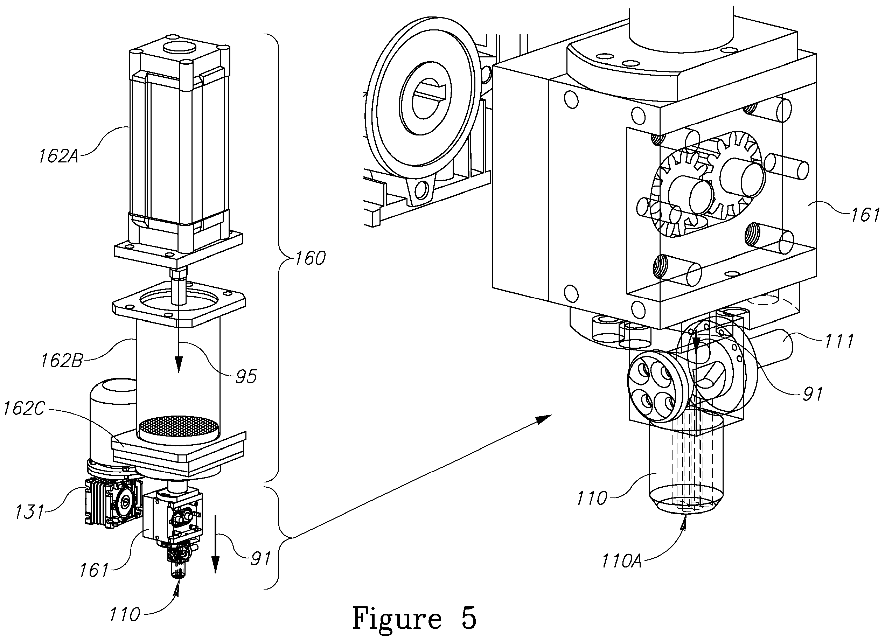

**Figure 5** is a high level schematic illustration of exemplary strand production module **160** and tip **110,** according to some embodiments of the invention. In the illustrated non-limiting embodiments, strand production module **160** may comprise a piston **162A** pushing raw material **95** such as pellets into a raw material container **162B**. The raw material is then melted by heater **162C** and extruded by extruder **161** (e.g., a dosage pump driven by motor **131** through multiple holes) to provide solid strands **90** to tip **110,** in which the surfaces of strands **90** may be liquefied prior to their attachment. Aperture control member **111** may be configured similarly to the illustration in **Figure 4B** to control the number of strands **95** provided to tip **110** and exiting aperture(s) **110A.**

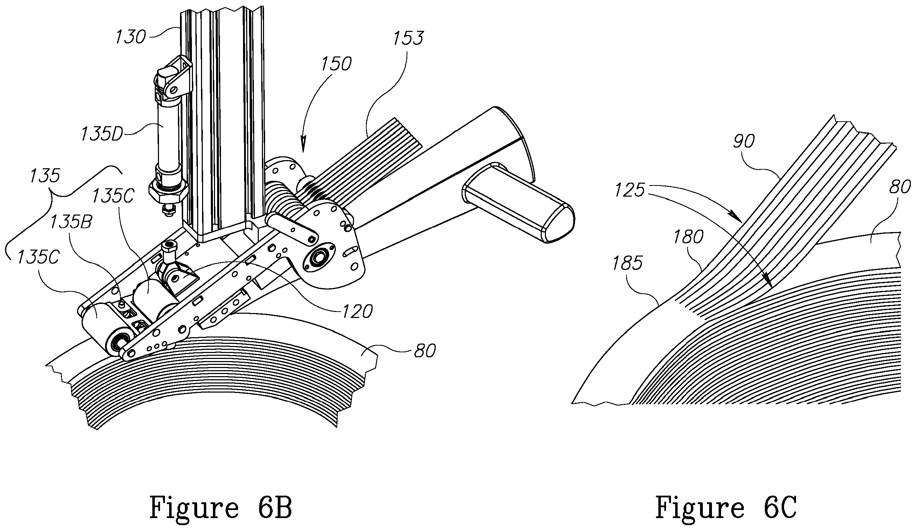

**Figures 6A- 6F** are high level schematic illustrations of system **100** using strands **90** as added material **91,** according to some embodiments of the invention. **Figure 6A** schematically illustrates feeder **150** receiving strands **90** and directing them to tip **110** and comprises strand timing module **151** having a plurality of motors **131** and wheels **152** driven by respective motors **131** and configured to move and control strands **90** fed to tip **110** (e.g., with respect to required manufacturing geometry). Sensors **142** may be configured to provide feedback on strand status (e.g., strand presence and type, velocity etc.). The separate control of each strand **90** provides precise control on the manufacturing process. **Figure 6B** schematically illustrates attachment unit **135** comprising a guiding roller **135C,** side rollers **135B** and an attachment roller **135C** configured, respectively, to guide strands **90** towards tip **110,** secure the lateral positions of strands **90** and possibly press strands **90** against each other, and ensure adhesion and contact between strands **90** and/or attached strands **180** and substrate **80.** Positioning unit **130** may further comprise a piston **135D** for pressing tip **110** against substrate. Attachment of strands **90** to substrate **80** comprise a relative movement therebetween to enhance the uniformity of the re-solidification. Heating element **120** may be positioned adjacent to attachment unit **135** to liquefy strand surfaces. Feeder **150** comprises guides **153** configured to feed strands **90** at specified angles into tip **110,** either parallel or at specified angles which is selected to provide additional lateral pressure among strands **90** that be selected to further enhance then- attachment. Guides **153** may be configured to provide a selected spatial configuration of strands **90,** as exemplified below. **Figure 6C** schematically illustrates substrate **80** having strands **90** attached to each other to form stripe **180** which is simultaneously of consecutively attached as added material **185** to substrate **80.** Either or both substrate **80** and tip **110** are moved to provide continuous addition of material **185.** Re- solidification **125** is shown schematically, both for strands **90** attaching to each other and for stripe **180** to substrate **80.**

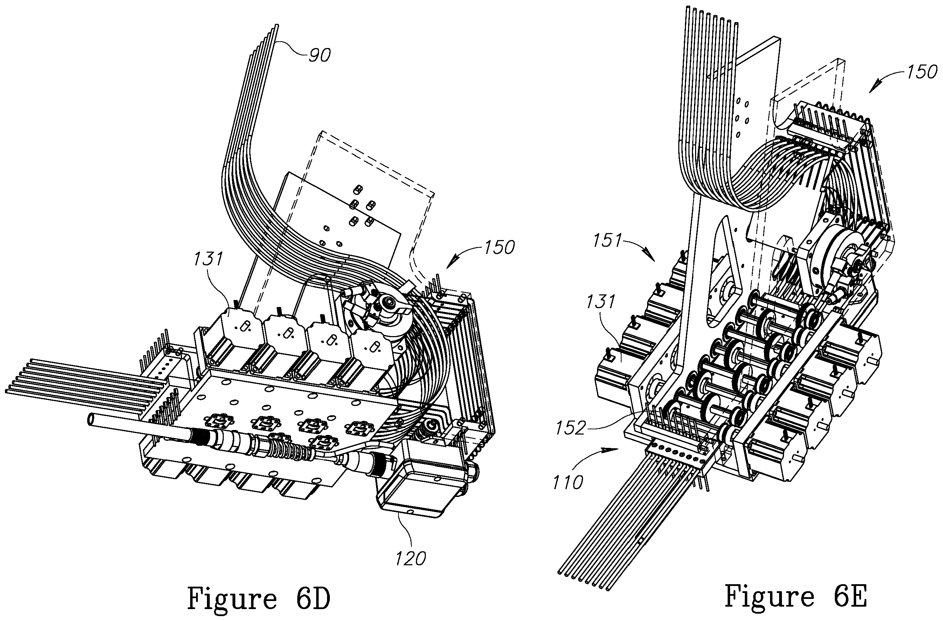

**Figures 6D** and **6E** are perspective bottom view and perspective top view, respectively, of feeder **150,** strand timing module **151** and tip **110,** according to some embodiments of the invention. Heater unit **120** is illustrated at the bottom of the device and may be configured to heat substrate **80,** e.g. by hot an- convection, and possibly also strands **90.** **Figure 6F** schematically illustrates tip **110** with heating element **120** configured to liquefy the strand surfaces and optionally liquefy the surface of substrate **80** to provide attachment and monolithic re-solidification of strands **90** to substrate **80.** Strand and substrate heating may be carried out by a single heating element **120** or by multiple heating elements **120.**

**Figures 7A-7F** are high level schematic configurations of attached strands at various spatial configurations **185A-F,** according to some embodiments of the invention. Individual strands are illustrated as being separate for clarity of the explanation, although they are monolithically attached in the actual manufactured product or part. Any of the spatial configurations may comprise multiple steps of additive manufacturing of strands. **Figure 7A** schematically illustrates a spatial configuration **185A** of strands **90** that yields a hanging, bench-like structure. Strands may be added in sequential addition steps utilizing a varying number of strands attached to each other prior to deposition, to provide strength in the horizontal dn-ection. **Figure 7B** schematically illustrates a spatial configuration **185B** of strands **90** that yields a flange having adjustable fine scale characteristics that are determined according to the specific strand feeding configuration. **Figure 7C** schematically illustrates a spatial configuration **185C** of strands **90** that yields a complex structure that is nevertheless monolithically attached and has uniform mechanical properties across the structure. The disclosed system **100** and method **300** provide the capability to modify and monitor a highly versatile spatial strand configuration to yield many complex structures. **Figure 7D** schematically illustrates a spatial configuration **185D** of strands **90** that yields a partially hollow intermediate layer **(185D-2,** having zigzag-attached strands) between an inner and an outer continuous layers, **185D-1** and, respectively. Spatial configuration **185D** may be used e.g., to reduce the weight of a produced cylindrical part (see **Figure 2****)** by intermediate layer **185D-2,** while providing required properties of the inner and outer surfaces thereof. **Figure 7E** schematically illustrates a spatial configuration **185E** of strands **90** that yields an overhang that provide a dome- like structure without requiring any supports as in traditional 3D printing. The mechanical strength results from strands **90** attached to each other prior to their deposition. **Figure 7F** schematically illustrates a spatial configuration **185F** of flattened strands **90/180** that yields an overhang that provides a dome-like structure. Flattened strands **180** may be produced from attached thin strands or may be received in broad strand form as fed material **91.**

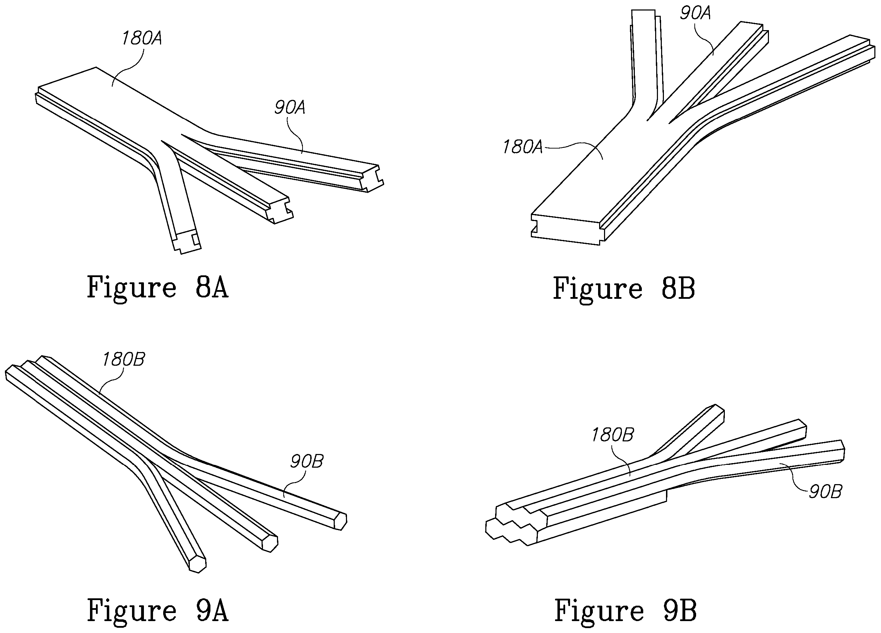

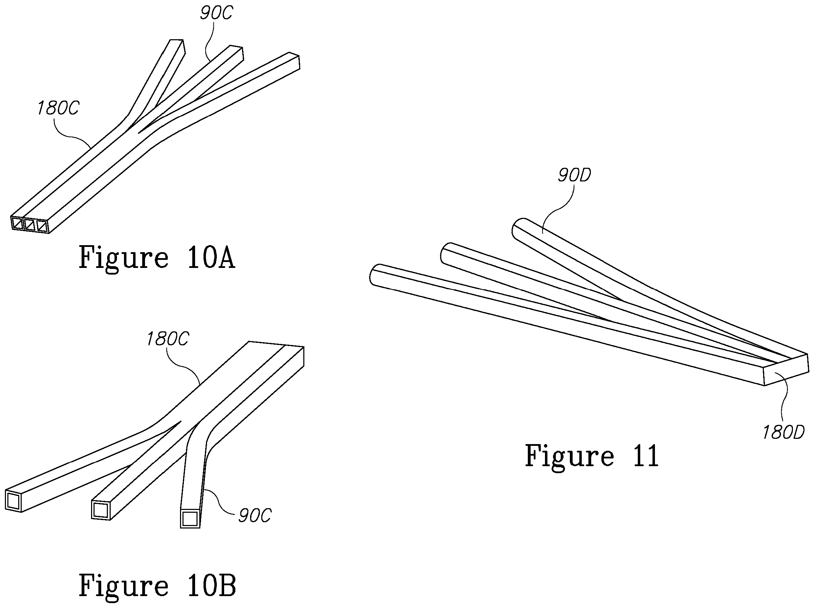

**Figures 8A-11** are high level schematic illustrations of various types of strands **90** and their attachment, according to some embodiments of the invention. **Figures 8A** and **8B** schematically illustrate strands **90A** having a complex H-like profile which complement each other upon attaching strands **90A** into stripe **180A,** the respective protrusions and recesses in the profile supporting the attachment by surface liquefaction. **Figures 9A** and **9B** schematically illustrate strands **90B** having hexagonal profiles (that may be solid or hollow), which complement lower and upper deposited strands **90B** upon attachment into stripe **180B** and onto substrate **80** (not shown). **Figures lOA** and **lOB** schematically illustrate strands **90C** having hollow profiles (the outer periphery of the hollow is maintained solid during attachment of strands **90C)** providing stripe **180C** with hollows that reduce their weight and may enable insertion of wires into the hollows. **Figure 11** schematically illustrates strands **90D** having round profiles which are attached to form stripe **180D** having a rectangular profile, achieved by the surface melting of strands **90D,** possibly under application of some lateral pressure or guidance. The cores of strands **90D** are maintained solid during the attachment process to avoid thermal deformation.

Elements from **Figures lA** and **lB** as well as from **Figures 2-11** may be combined in any operable combination, and the illustration of certain elements in certain figures and not in others merely serves an explanatory purpose and is non-limiting.

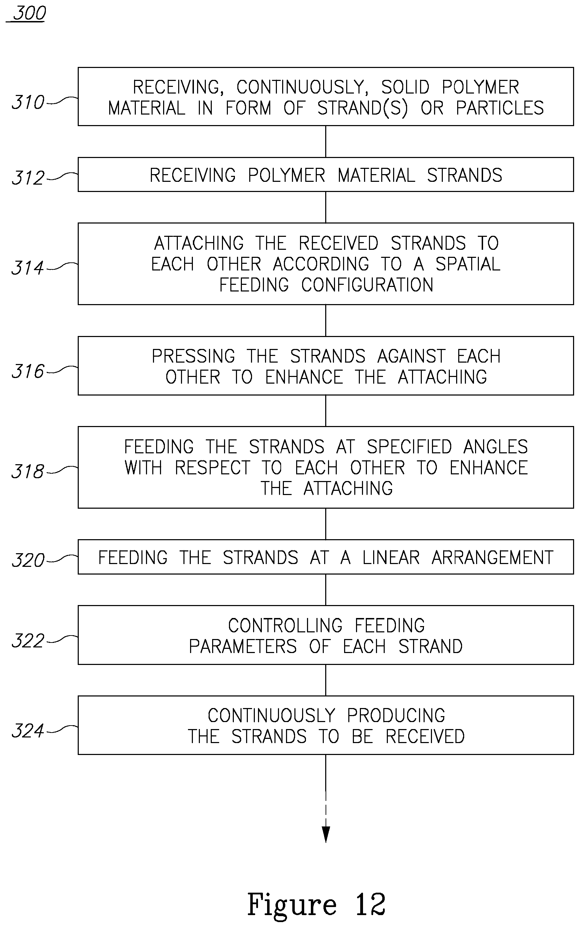

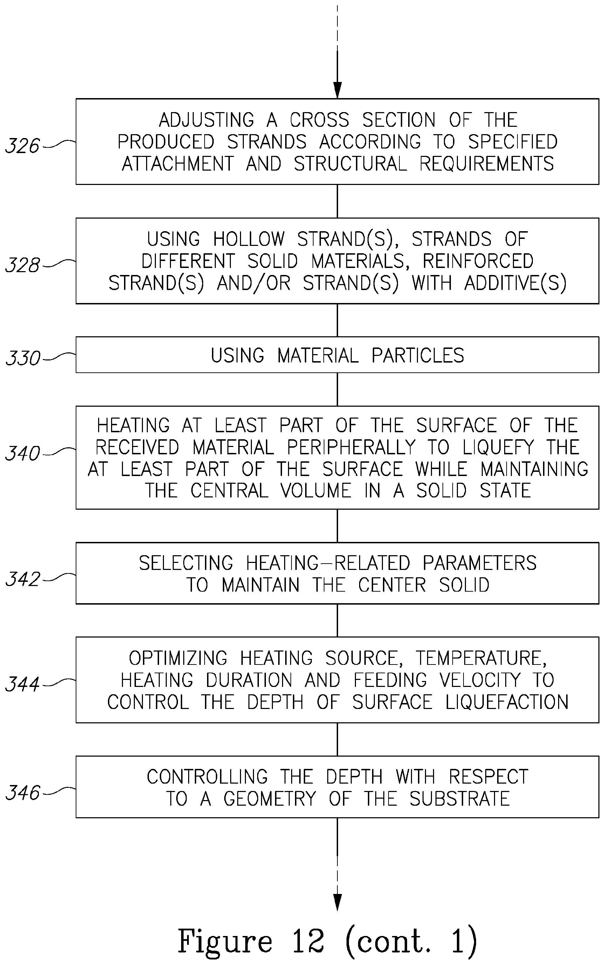

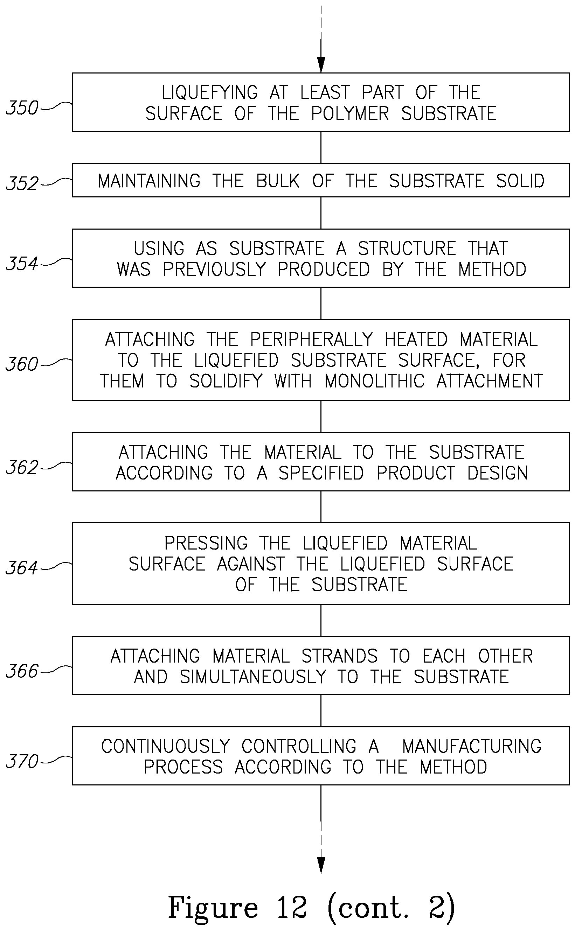

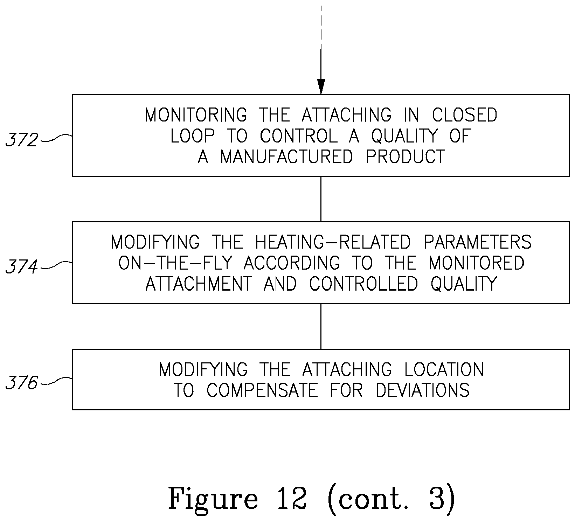

**Figure 12** is a high level flowchart illustrating a method **300** of additive manufacturing, according to some embodiments of the invention. The method stages are carried out with respect to system **100** described above, which is configured to implement method **300**. Method **300** is partially implemented, with respect to the control processes, by at least one computer processor. Certain embodiments comprise computer program products comprising a computer readable storage medium having computer readable program embodied therewith and configured to carry out of the relevant stages of method **300**.

Method **300** comprises receiving, continuously, solid polymer material in form of at least one strand or a plurality of particles (stage **310),** heating a surface of the continuously received solid polymer material peripherally to liquefy the surface, using specified heating-related parameters which are selected to maintain a central volume of the continuously received solid polymer material in a solid state (stage **340),** optionally selecting heating-related parameters to maintain the center solid (stage **342).** Method **300** further comprises liquefying a surface of a polymer substrate (stage **350),** maintaining the bulk of the substrate solid (stage **352),** and attaching the peripherally heated surface of the continuously received solid polymer material to the liquefied surface of the polymer substrate, wherein the attachment to the polymer substrate is achieved by a re-solidification of the liquefied surface to yield monolithic attachment (stage **360).** Substrate comprising a structure that was previously produced by method **300** may be used (stage **354).**
Receiving **310** comprises receiving continuously, a plurality of solid material strands (stage **312)** and attaching **360** comprises attaching the plurality of strands to each other, according to a spatial feeding configuration (stage **314),** such as a linear arrangement of the strands next to each other (stage **320).** Method **300** further comprises pressing the strands against each other to enhance the attaching (stage **316).** Method **300** further comprises feeding the strands at specified angles with respect to each other to enhance the attaching (stage **318).** Method **300** further comprises controlling feeding parameters of each strand to be received (stage **322)** to control the form of the manufactured product and to control the heating period of the strands. Alternatively or complementarily, attaching **360** comprises attaching the strands to each other and, simultaneously, attaching the strands to the substrate (stage **366).** Alternatively or complementarily, method **300** comprises using polymer particles as the solid polymer material (stage **330).**

Method **300** may further comprise continuously producing the strands to be received (stage **324),** e.g., by extrusion. Method **300** may further comprise adjusting a cross section of the produced strands according to specified attachment and structural requirements (stage **326)** and possibly using hollow strand(s), strands of different solid materials, enforced strand(s) and strand(s) with additive(s) (stage **328).**

Method **300** may further comprise carrying out attaching **360** with respect to the substrate according to a specified product design (stage **362).** In certain embodiments, method **300** further comprises pressing the peripherally heated surface of the continuously received solid material against the liquefied surface of the substrate (stage **364).**

Method **300** may further comprise optimizing the specified heating-related parameters such as the choice of heat source, adjustment of the heating temperature, the heating duration and the feeding velocity of the solid material (stage **344)** and optionally modifying the specified heating- related parameters to determine and control a depth of surface liquefaction with respect to a geometry of the substrate, while maintaining the central volume in a solid state (stage **346).** Method **300** may further comprise continuously controlling a manufacturing process according to method **300** and/or monitoring the attaching in closed loop to control a quality of a manufactured product (stage **372)** and optionally modifying the specified heating-related parameters on-the-fly according to the monitored attachment, manufacturing process and controlled quality (stage **374).** Method **300** may further comprise modifying the attaching location (e.g., according to the closed-loop monitoring) to compensate for geometry deviation from a desired parameter such as position, volume, tolerance etc. (stage **376).**

Aspects of the present invention are described above with reference to flowchart illustrations and/or portion diagrams of methods, apparatus (systems) and computer program products according to embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the invention. The various appearances of "one embodiment", "an embodiment", "certain embodiments" or "some embodiments" do not necessarily all refer to the same embodiments. Although various features of the invention may be described in the context of a single embodiment, the features may also be provided separately or in any suitable combination. Conversely, although the invention may be described herein in the context of separate embodiments for clarity, the invention may also be implemented in a single embodiment. Certain embodiments of the invention may include features from different embodiments disclosed above, and certain embodiments may incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims.

## Claims

1. A method (300) of additive manufacturing, the method comprising:
receiving (310, 312), continuously, solid polymer material in form of at least one first strand (90) and at least one second strand (90),
liquifying (340) at least a part of only the surfaces of the at least one first strand and the at least one second strand,
attaching (360) the liquified at least part of the surfaces of the at least one first strand and the at least one second strand, wherein the attachment of the at least one first strand and the at least one second strand is achieved by a re-solidification (125) of the liquefied at least parts of the surfaces to yield monolithic attachment, and
pressing the at least one first strand and the at least one second strand against each other to enhance the attachment, thus forming a stripe (180) which is simultaneously or consecutively attached as added material (185) to a substrate (80).

2. The method of claim 1, further comprising at least one of:
controlling feeding velocity of each strand to be received, and
continuously producing the strands to be received and optionally adjusting a cross section of the produced strands according to specified attachment and structural requirements.

3. The method of claim 1, wherein the at least one first strand and the at least one second strand comprise at least one of: at least one hollow strand, strands of different solid materials, at least one reinforced strand and at least one strand with an additive.

4. The method of claim 1, wherein liquifying at least a part of only the surfaces of at least one first strand and the at least one second strand is conducted using specified heating-related parameters comprise at least one of a heat source, a heating temperature, a heating duration and a feeding velocity of the solid material; and the method further comprises modifying the specified heating-related parameters to determine a depth of surface liquefaction with respect to a geometry of the substrate, while maintaining the central volume in a solid state.

5. The method of claim 1, further comprising continuously controlling a manufacturing process according to the method, and optionally monitoring the attaching in closed loop to control a quality of a manufactured product.

6. The method of any one of claims 1-5, wherein the solid polymer material comprises polypropylene or polyethylene.

7. An additive manufacturing system (100) comprising:
a feeder (150) configured to feed, continuously, at least one first strand (90) and at least one second strand (90),
at least one first tip (110) configured to receive, continuously, the at least one first strand and the at least one second strand from the feeder,
at least one heating element (120), configured to heat at least part of surfaces of the one first strand and the at least one second strand to liquefy only the surfaces by heating, and
an attachment unit (135) configured to attach and press the at least one first strand and the at least one second strand to each other thus forming a stripe (180), and configured to simultaneously or consecutively attach the stripe as added material (185) to the substrate (80).

8. The system of claim 7, wherein at least one of the following applies:
the spatial feeding configuration is a linear arrangement of the strands next to each other,
the feeder is further configured to control feeding velocity of each strand fed to the at least one tip,
the strands have a rectangular or a triangular cross section,
the system further comprises a strand production module configured to produce the strands, continuously and simultaneously with the feeding, and optionally further configured to adjust a cross section of the produced strands according to specified attachment and structural requirements, and
the strands comprise at least one of: at least one hollow strand, strands of different solid materials, at least one reinforced strand and at least one strand with an additive.

9. The system of claim 7, wherein liquifying at least part of only the surfaces of at least one first strand and the at least one second strand is conducted using specified heating-related parameters comprise at least one of a heat source, a heating temperature, a heating duration and a feeding velocity of the solid material; and the system further comprises a control module configured to control at least one of the feeder, the heating element and the positioning unit, the control module further configured to modify the specified heating-related parameters to determine a depth of surface liquefaction with respect to a geometry of the strands, while maintaining the central volume in a solid state.

10. The system of claim 9, further comprising a control module configured to control at least one of: the feeder, the at least one heating element and the attachment unit, the control module further configured to continuously control a manufacturing process by the system and/or to monitor the attachment in closed loop to control a quality of a manufactured product.

## Patentansprüche

1. Verfahren (300) zur additiven Fertigung, wobei das Verfahren umfasst:
kontinuierliches Aufnehmen (310, 312) von festem Polymermaterial in Form von mindestens einem ersten Strang (90) und mindestens einem zweiten Strang (90),
Verflüssigen (340) mindestens eines Teils nur der Oberflächen des mindestens einen ersten Strangs und des mindestens einen zweiten Strangs,
Verbinden (360) des verflüssigten mindestens einen Teils der Oberflächen des mindestens einen ersten Strangs und des mindestens einen zweiten Strangs, wobei das Verbinden des mindestens einen ersten Strangs und des mindestens einen zweiten Strangs durch eine Wiederverfestigung (125) der verflüssigten mindestens Teile der Oberflächen erreicht wird, um eine monolithische Verbindung zu ergeben, und
Gegeneinanderpressen des mindestens einen ersten Strangs und des mindestens einen zweiten Strangs, um die Verbindung zu verstärken, wodurch ein Streifen (180) gebildet wird, der gleichzeitig oder nacheinander als hinzugefügtes Material (185) mit einem Substrat (80) verbunden wird.

2. Verfahren nach Anspruch 1, das ferner mindestens einen der folgenden Schritte umfasst:
Steuern der Vorschubgeschwindigkeit jedes aufzunehmenden Strangs und
kontinuierliches Herstellen der aufzunehmenden Stränge und optional Einstellen eines Querschnitts der hergestellten Stränge entsprechend vorgegebenen Befestigungs- und Strukturanforderungen.

3. Verfahren nach Anspruch 1, bei dem der mindestens eine erste Strang und der mindestens eine zweite Strang mindestens eines umfasst von: mindestens einem hohlen Strang, Strängen aus unterschiedlichen festen Materialien, mindestens einem verstärkten Strang und mindestens einem Strang mit einem Zuschlag.

4. Verfahren nach Anspruch 1, bei dem das Verflüssigen mindestens eines Teils nur der Oberflächen des mindestens einen ersten Strangs und des mindestens einen zweiten Strangs unter Verwendung spezifizierter erhitzungsbezogener Parameter durchgeführt wird, die mindestens eines von einer Wärmequelle, einer Erhitzungstemperatur, einer Erhitzungsdauer und einer Zuführgeschwindigkeit des festen Materials umfassen; und das Verfahren ferner das Modifizieren der spezifizierten erhitzungsbezogenen Parameter umfasst, um eine Tiefe der Oberflächenverflüssigung in Bezug auf eine Geometrie des Substrats zu bestimmen, während das zentrale Volumen in einem festen Zustand gehalten wird.

5. Verfahren nach Anspruch 1, das ferner das kontinuierliche Steuern eines Fertigungsprozesses gemäß dem Verfahren und optional das Überwachen des Verbindens im geschlossenen Regelkreis umfasst, um die Qualität eines hergestellten Produkts zu steuern.

6. Verfahren nach einem der Ansprüche 1 bis 5, bei dem das feste Polymermaterial Polypropylen oder Polyethylen umfasst.

7. Additives Fertigungssystem (100), umfassend:
eine Zuführvorrichtung (150), die konfiguriert ist, um kontinuierlich mindestens einen ersten Strang (90) und mindestens einen zweiten Strang (90) zuzuführen,
mindestens eine erste Spitze (110), die konfiguriert ist, um kontinuierlich den mindestens einen ersten Strang und den mindestens einen zweiten Strang von der Zuführvorrichtung aufzunehmen,
mindestens ein Heizelement (120), das konfiguriert ist, um mindestens einen Teil der Oberflächen des einen ersten Strangs und des mindestens einen zweiten Strangs zu erhitzen, um nur die Oberflächen durch Erhitzung zu verflüssigen, und
eine Verbindungseinheit (135), die konfiguriert ist, um den mindestens einen ersten Strang und den mindestens einen zweiten Strang miteinander zu verbinden und zu pressen, um so einen Streifen (180) zu bilden, und die konfiguriert ist, um den Streifen als hinzugefügtes Material (185) gleichzeitig oder nacheinander mit dem Substrat (80) zu verbinden.

8. System nach Anspruch 7, bei dem mindestens eines der folgenden Merkmale zutrifft:
die räumliche Zuführkonfiguration ist eine lineare Anordnung der Stränge nebeneinander,
die Zuführeinrichtung ist ferner konfiguriert, um die Zuführgeschwindigkeit jedes der mindestens einen Spitze zugeführten Strangs zu steuern,
die Stränge haben einen rechteckigen oder dreieckigen Querschnitt,
das System umfasst ferner ein Strangerzeugungsmodul, das konfiguriert ist, um die Stränge kontinuierlich und gleichzeitig mit dem Zuführen zu erzeugen, und das optional ferner konfiguriert ist, um einen Querschnitt der erzeugten Stränge gemäß spezifizierten Befestigungs- und Strukturanforderungen einzustellen, und
die Stränge umfassen mindestens eines von: mindestens einem hohlen Strang, Strängen aus verschiedenen festen Materialien, mindestens einem verstärkten Strang und mindestens einem Strang mit einem Zuschlag.

9. System nach Anspruch 7, bei dem das Verflüssigen mindestens eines Teils nur der Oberflächen mindestens eines ersten Strangs und des mindestens einen zweiten Strangs unter Verwendung spezifizierter erhitzungsbezogener Parameter durchgeführt wird, die mindestens eines von einer Wärmequelle, einer Erhitzungstemperatur, einer Erhitzungsdauer und einer Zuführgeschwindigkeit des Feststoffs umfassen; und bei dem das System ferner ein Steuermodul umfasst, das konfiguriert ist, um die Zuführvorrichtung, das Heizelement und/oder die Positioniereinheit zu steuern, wobei das Steuermodul ferner konfiguriert ist, um die spezifizierten erhitzungsbezogenen Parameter zu modifizieren, um eine Tiefe der Oberflächenverflüssigung in Bezug auf eine Geometrie der Stränge zu bestimmen, während das zentrale Volumen in einem festen Zustand gehalten wird.

10. System nach Anspruch 9, ferner mit einem Steuermodul, das konfiguriert ist, um mindestens eines von der Zuführvorrichtung, dem mindestens einen Heizelement und der Verbindungseinheit zu steuern, wobei das Steuermodul ferner konfiguriert ist, einen Fertigungsprozess durch das System kontinuierlich zu steuern und/oder die Verbindungseinheit im geschlossenen Regelkreis zu überwachen, um eine Qualität eines hergestellten Produkts zu steuern.

## Revendications

1. Procédé (300) de fabrication additive, le procédé comprenant les étapes consistant à :
recevoir (310, 312), en continu, un matériau polymère solide sous forme d'au moins un premier brin (90) et d'au moins un deuxième brin (90),
liquéfier (340) au moins une partie de seulement les surfaces de l'au moins un premier brin et de l'au moins un deuxième brin,
fixer (360) l'au moins une partie liquéfiée des surfaces de l'au moins un premier brin et de l'au moins un deuxième brin, où la fixation de l'au moins un premier brin et de l'au moins un deuxième brin est réalisée par une re-solidification (125) des au moins parties liquéfiées des surfaces pour obtenir une fixation monolithique, et
presser l'au moins un premier brin et l'au moins un deuxième brin l'un contre l'autre pour améliorer la fixation, formant ainsi une bande (180) qui est simultanément ou consécutivement fixée en tant que matériau ajouté (185) à un substrat (80).

2. Procédé de la revendication 1, comprenant en outre au moins l'une des étapes consistant à :
commander une vitesse d'acheminement de chaque brin à recevoir, et
produire en continu les brins à recevoir et éventuellement ajuster une section transversale des brins produits selon des exigences de fixation et de structure spécifiées.

3. Procédé de la revendication 1, dans lequel l'au moins un premier brin et l'au moins un deuxième brin comprennent au moins l'un parmi : au moins un brin creux, des brins de matériaux solides différents, au moins un brin renforcé et au moins un brin avec un additif.

4. Procédé de la revendication 1, dans lequel la liquéfaction d'au moins une partie de seulement les surfaces d'au moins un premier brin et de l'au moins un deuxième brin est effectuée en utilisant des paramètres spécifiés liés au chauffage, comprenant au moins l'une parmi une source de chaleur, une température de chauffage, une durée de chauffage et une vitesse d'acheminement du matériau solide ; et le procédé comprend en outre l'étape consistant à modifier les paramètres spécifiés liés au chauffage pour déterminer une profondeur de liquéfaction de surface par rapport à une géométrie du substrat, tout en maintenant le volume central à un état solide.

5. Procédé de la revendication 1, comprenant en outre les étapes consistant à commander en continu un processus de fabrication selon le procédé, et à surveiller éventuellement la fixation en boucle fermée pour contrôler une qualité d'un produit fabriqué.

6. Procédé de l'une quelconque des revendications 1 à 5, dans lequel le matériau polymère solide comprend du polypropylène ou du polyéthylène.

7. Système de fabrication additive (100) comprenant :
un dispositif d'acheminement (150) configuré pour acheminer, en continu, au moins un premier brin (90) et au moins un deuxième brin (90),
au moins une première pointe (110) configurée pour recevoir, en continu, l'au moins un premier brin et l'au moins un deuxième brin du dispositif d'acheminement,
au moins un élément chauffant (120), configuré pour chauffer au moins une partie de surfaces du premier brin et de l'au moins un deuxième brin pour liquéfier seulement les surfaces par chauffage, et
une unité de fixation (135) configurée pour fixer et presser l'au moins un premier brin et l'au moins un deuxième brin l'un contre l'autre, formant ainsi une bande (180), et configurée pour fixer simultanément ou consécutivement la bande en tant que matériau ajouté (185) au substrat (80).

8. Système de la revendication 7, dans lequel au moins l'un des points suivants s'applique :
la configuration spatiale d'acheminement est un agencement linéaire des brins les uns à côté des autres,
le dispositif d'acheminement est en outre configuré pour commander la vitesse d'acheminement de chaque brin acheminé vers l'au moins une pointe,
les brins ont une section transversale rectangulaire ou triangulaire,
le système comprend en outre un module de production de brins configuré pour produire les brins, en continu et simultanément avec l'acheminement, et éventuellement configuré en outre pour ajuster une section transversale des brins produits selon les exigences de fixation et de structure spécifiées, et
les brins comprennent au moins l'un parmi : au moins un brin creux, des brins de matériaux solides différents, au moins un brin renforcé et au moins un brin avec un additif.

9. Système de la revendication 7, dans lequel la liquéfaction d'au moins une partie de seulement les surfaces d'au moins un premier brin et de l'au moins un deuxième brin est effectuée en utilisant des paramètres spécifiés liés au chauffage comprenant au moins l'une parmi une source de chaleur, une température de chauffage, une durée de chauffage et une vitesse d'acheminement du matériau solide ; et le système comprend en outre un module de commande configuré pour commander au moins l'un(e) parmi le dispositif d'acheminement, l'élément chauffant et l'unité de positionnement, le module de commande étant en outre configuré pour modifier les paramètres spécifiés liés au chauffage afin de déterminer une profondeur de liquéfaction de surface par rapport à une géométrie des brins, tout en maintenant le volume central à un état solide.

10. Système de la revendication 9, comprenant en outre un module de commande configuré pour commander au moins l'un(e) parmi : le dispositif d'acheminement, l'au moins un élément chauffant et l'unité de fixation, le module de commande étant en outre configuré pour commander en continu un processus de fabrication par le système et/ou pour surveiller la fixation en boucle fermée pour contrôler une qualité d'un produit fabriqué.
